# EUROPÄISCHE PATENTSCHRIFT

(11) **EP 0 541 099 B1**
(45) Veröffentlichungstag und Bekanntmachung des Hinweises auf die Patenterteilung: **29.05.1996**
(21) Anmeldenummer: 92118991.6
(22) Anmeldetag: 05.11.1992
(51) Int. Cl.: B23K 3/02

(54) **Lötstation**
Soldering station
Station de brasage

(30) Priorität: 08.11.1991 CH 3266/91
(43) Veröffentlichungstag der Anmeldung: 12.05.1993
(73) Patentinhaber: ELVO ELEKTRONIK AG, c/o ZUMBACH ELECTRONIC AG, CH-2552 Orpund (CH)
(72) Erfinder: Vogler, Franz, CH-5443 Niederrohrdorf (CH)
(74) Vertreter: Jaeger, Klaus, Dr.

(56) Entgegenhaltungen:
- DE-A- 3 523 885
- US-A- 4 456 816
- US-A- 5 048 742

## Beschreibung

Die vorliegende Erfindung betrifft eine Lötstation mit mindestens einem Lötkolben und einem Regelgerät für denselben oder dieselben und einem am Regelgerät lösbar aufsetzbaren Lötkolben-Reinigungsgerät gemäß dem Oberbegriff des Anspruchs 1.

Eine gattungsgemäße Lötstation ist aus der US-PS 5 048 742 bekannt. Es handelt sich bei dieser Lötstation um eine modular aufgebaute Lötstation, die eine Grundeinheit mit einer den Lötkolben speisenden Stromquelle und eine Vielzahl von Haltevorrichtungen aufweist, an welche modular aufgebaute Zusatzeinrichtungen, wie beispielsweise Entlötwerkzeuge, Bauteilaufnahmewerkzeuge, auf Vakuumbasis arbeitende Lötdampfbeseitigungsvorrichtungen und Verbindungseinrichtungen, jeweils für die genannten Vorrichtungen angeordnet werden können.

Diese bekannte Vorrichtung ist dabei so ausgebildet, daß die vorgenannten modularen optionalen Ausrichtungsgegenstände jeweils in schwalbenschwanzförmig ausgebildeten Einrichtungen an der Oberseite des Gehäuses der modularen Lötstation angeordnet werden können, wobei es hierzu erforderlich ist, die optionalen Vorrichtungen gerichtet von vorne in die entsprechend ausgebildeten Aufnahmeeinrichtungen einzuschieben. Die bereits erwähnte Entlötvorrichtung kann dabei mit einer Reinigungsvorrichtung ausgestattet werden, die zur Reinigung von dem an der Entlötvorrichtung vorhandenen Entlötkolben dient.

Ausgehend hiervon liegt der vorliegenden Erfindung die Aufgabe zugrunde, die gattungsgemäße Lötstation derart weiterzubilden, daß das Lötkolben-Reinigungsgerät schnell und ohne weiteres vom Regelgerät getrennt werden kann und zugleich sichergestellt ist, daß auf das Regelgerät vom Lötkolben-Reinigungsgerät keinerlei störende Spannungseinflüsse einwirken können.

Die Erfindung weist zur Lösung dieser Aufgabe die im Anspruch 1 angegebenen Merkmale auf. Vorteilhafte Ausgestaltungen hiervon sind in den Unteransprüchen angegeben.

Es ist damit eine klare Trennung der Regelelektronik und des mit Flüssigkeit arbeitenden Reinigungsgerätes möglich. Es ist auch eine optimale Abschirmung der Elektronik von dem mit einem Motor ausgerüsteten Reinigungsgerät möglich, indem das Gehäuse des Regelgerätes metallisch und somit abschirmend ausgeführt werden kann, während das Reinigungsgerät ein Gehäuse aus zweckensprechendem Material, vorzugsweise Kunststoff, aufweisen kann. Da es unter anderem darum geht, die Übertragung irgendwelcher noch so bedeutender Fremdspannungen über den Lötkolben auf die zu lötende, hochempfindliche Elektronik auszuschliessen, kann es weiter von Vorteil sein, das Reinigungsgerät vom Regelgerät her mit Niederspannung zu speisen. Schließlich kann der Netztransformator in einem separaten Gehäuse getrennt vom Regelgerät untergebracht und vorzugsweise vom Regelgerät ein- und ausschaltbar sein.

Eine weitere erfindungsgemäße Zielsetzung besteht darin, ein rationelles Arbeiten mit der Lötstation zu gestatten und dennoch Energie zu sparen und eine hohe Lebensdauer des Lötkolbens, insbesondere der Lötspitze, sicherzustellen. Zu diesem Zweck wird erfindungsgemäß ein Standby-Schaltzustand der Regelelektronik vorgesehen, bei welchem der Lötkolben auf eine geeignete Temperatur von beispielsweise 150°C vorgeheizt wird. Ein weiteres Ziel besteht darin, jederzeit eine Nacheichung des Regelgerätes derart vornehmen zu können, daß die Lötspitzentemperatur wirklich der angezeigten Temperatur entspricht. Zu diesem Zwecke ist ein Eichkreis mit einem Fühler zur Erfassung der Lötspitzentemperatur und zur Korrektur des Regelkreises vorgesehen. Der Fühler kann dabei separat aufgestellt werden oder im Regelgerät integriert sein.

Die Erfindung wird nun anhand eines in der Zeichnung dargestellten Ausführungsbeispiels näher erläutert.

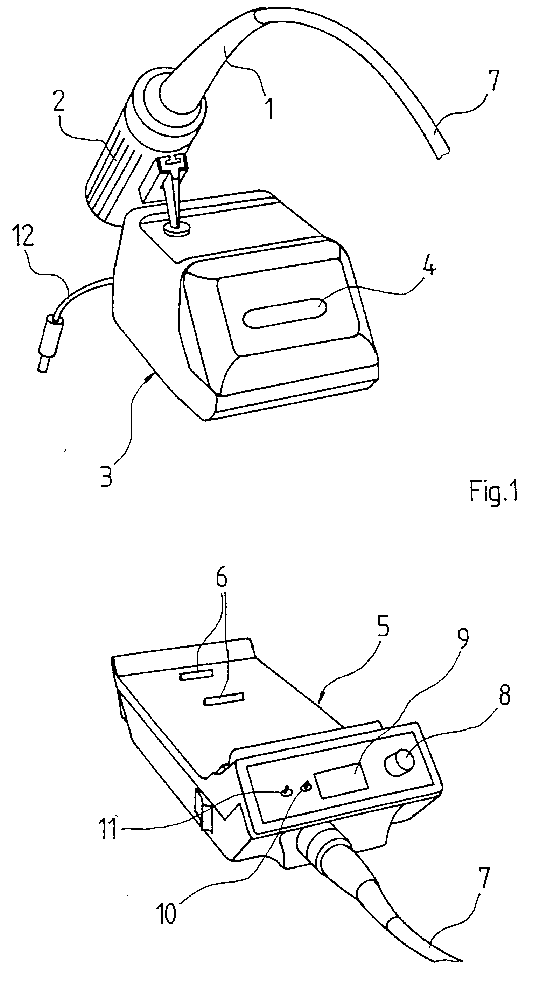

Figur 1 ist eine räumliche Darstellung der Lötstation mit dem Lötkolben 1, der in einem Köcher 2 steckt. Der Köcher ist auf einem Reingigungsgerät 3 montiert. Ein derartiges Reinigungsgerät ist an sich bekannt aus der CH-A-662 521. Es weist an der einen Stirnseite eine Oeffnung 4 auf, durch welche die Spitze des Lötkolbens eingeführt werden kann, um zwischen Reinigungswalzen gereinigt zu werden. Das Reinigungsgerät 3 kann auf die sattelartig ausgebildete Oberseite eines Regelgerätes 5 aufgesteckt werden, zu welchem Zwecke an der Oberseite nach oben sich verjüngende keilartige Rippen 6 vorgesehen sind, die beim Aufsetzen des Reinigungsgerätes 3 in Schlitze desselben eindringen und eine zuverlässige, aber lösbare Verbindung der beiden Geräte gestatten.

Das Regelgerät 5 weist ein Gehäuse aus Metall auf, um eine gute Abschirmung der im Gerät enthaltenen Regelelektronik für den Lötkolben zu erzielen. Der Lötkolben ist mit dem Regelgerät durch ein Kabel 7 verbunden. An einer auch bei aufgesetztem Reinigungsgerät 3 gut sichtbaren, geneigten Front weist das Steuergerät einen Einstellknopf 8 zur Einstellung der gewünschten Temperatur, eine Anzeige 9 sowie zwei Kippschalter 10 und 11 auf, deren Funktion noch erläutert wird. Das Reinigungsgerät 3 weist ein Anschlusskabel 12 auf, mittels welchem es fit einem Anschluss des Regelgerätes 5 verbunden werden kann, um das Reinigungsgerät mit Niederspannung zu betreiben.

Die Ausführung der Lötstation mit separaten, trennbaren Gehäusen für das Reinigungsgerät und das Regelgerät erlaubt eine optimale Abdichtung bzw. Abschirmung sowie eine optimale Materialwahl für die beiden Gerätegehäuse. Mechanisch ist eine klare doppelte Abdichtung zwischen dem Reinigungsgerät und dem Regelgerät realisiert, sodass jedes Durchsickern von Reinigungsflüssigkeit ins Innere des Regelgerätes absolut ausgeschlossen ist. Die Trennbarkeit der beiden Gehäuse erlaubt dabei eine gelegentliche Kontrolle und auch eine optimale, vom Regelgerät getrennte Wartung des Reinigungsgerätes und umgekehrt.

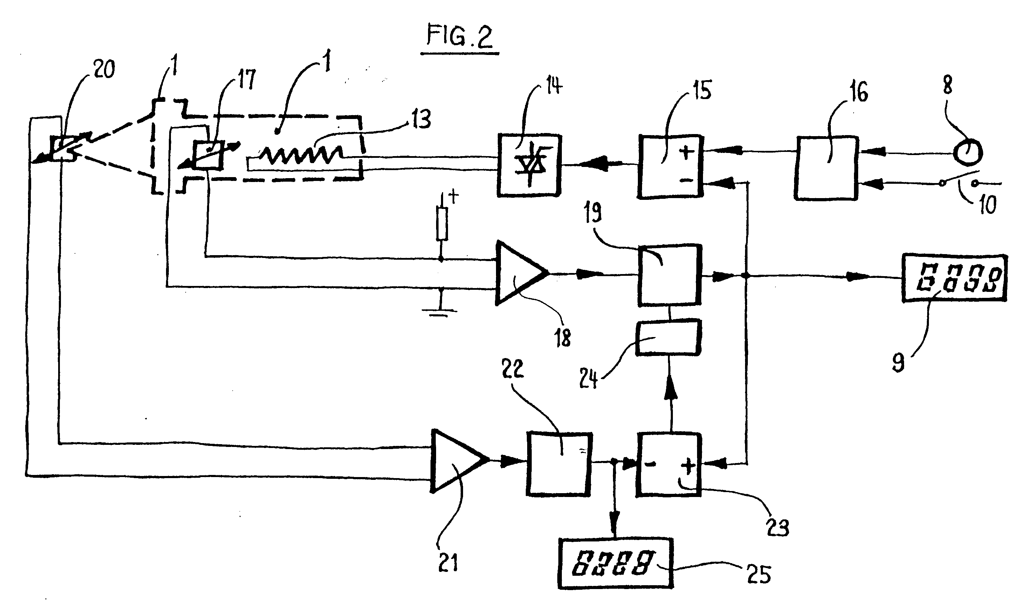

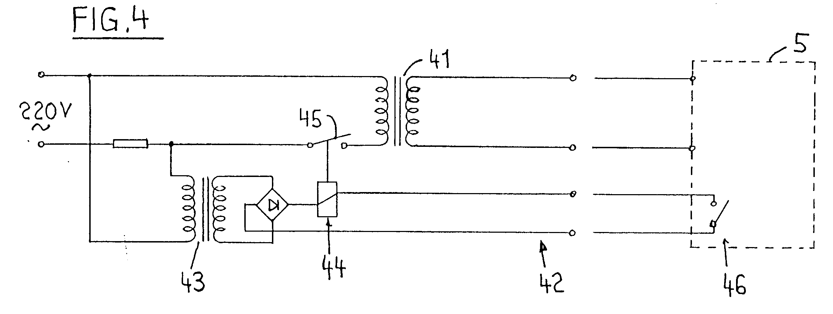

Figur 2 zeigt schematisch den Lötkolben 1 des Regelgerätes. Der Heizwiderstand 13 des Lötkolbens ist mit einem Leistungsschalter, beispielsweise einem Triac 14, verbunden, der von einem Regler 15 entsprechend der Differenz zwischen einem Sollwert (+) und einem Istwert (-) an seinen Eingängen gesteuert wird. Der Sollwert ist in einem Sollwertgeber oder -Speicher 16 enthalten und entspricht entweder der durch den Einstellknopf 8 eingestellten Solltemperatur oder aber der durch Betätigung des Schalters 10 eingegebenen Standby-Temperatur.

Im Lötkolben ist ein temperaturabhängiger Widerstand 17 untergebracht. Der Spannungsabfall an diesem Widerstand wird über einen Verstärker 18 einer Kalibrierschaltung, nämlich einem Multiplikator 19 zugeführt, an deren Ausgang der Istwert erscheint. Er wird auf der Anzeige 9 angezeigt. Im Falle eines Unterbruchs des Widerstandes 17 wird die Heizleistung auf Null geregelt.

Aus verschiedenen Gründen kann die Erfassung der Lötspitzentemperatur mittels des Fühlers 17 ungenau sein, bzw. sich ändern, was nach einer gelegentlichen Eichung der Regelschaltung ruft. Zu diesem Zwecke ist ein Thermofühler 20 vorgesehen, der separat aufgestellt oder im Regelgerät 5 an geeigneter Stelle integriert sein kann, und an welchen die Lötspitze des Lötkolbens 1 in der angedeuteten Weise angelegt werden kann. Der Fühler 20 ist mit einem Verstärker 21 verbunden, dessen Ausgang mit einer absolut kalibrierten Referenzschaltung 22 verbunden ist. Der Ausgang dieser Schaltung 22 wirkt auf den einen Eingang einer Vergleichsschaltung 23, an deren anderem Eingang der Istwert anliegt. Entsprechend der Differenz zwischen dem Eichwert und dem Istwert wird ein Eichwert-Speicher 24 gesetzt, welcher dem Multiplikator 19 den korrigierenden Multiplikationsfaktor liefert. Es kann eine weitere Anzeige 25 vorhanden sein, um den Wert am Ausgang der Referenzschaltung 22 anzuzeigen, aber es kann natürlich eine einzige Anzeige vorgesehen sein, welche alternativ den Istwert, bzw. den Eichwert, anzeigt. Dieser Umschaltung kann beispielsweise der Kippschalter 11 dienen, aber er kann auch anderen Zwecken dienen, beispielsweise zur alternativen Anzeige des Istwertes und des eingestellten Sollwertes.

Eine weitere Massnahme zum Schutze empfindlicher Bauteile besteht gemäss Figur 4 darin, dass der Netztransformator in einem separaten Gehäuse von der eigentlichen Lötstation getrennt angeordnet wird. Aus praktischen Gründen soll er jedoch vom Regelgerät 5 her ein- und ausgeschaltet werden können. Die Anordnung ist in Figur 4 schematisch dargestellt. Der Netztransformator 41 mit einer Leistung von beispielsweise 60 VA ist mit dem Regelgerät 5 über ein Kabel 42 verbunden, das in Figur 1 nicht dargestellt ist. Mit dem Netzeingang ist ein kleiner Hilfstransformator 43 von beispielsweise 1 VA verbunden, der über einen Gleichrichter ein Relais 44 mit einem Kontakt 45 speisen kann. Ein Schalter 46 bei der Lötstation gestattet somit den Heiztransformator 41 ein- und auszuschalten, ohne dass zur Lötstation hohe Schaltströme und -Spannungen gelangen.

Zur Sicherstellung, dass keine gefährdenden statischen Ladungen zu den zu lötenden Komponenten gelangen können, kann es vorteilhaft sein, auch das Gehäuse des Reinigungsgerätes 3 aus leitendem Kunststoff zu fertigen. Bei auf das Regelgerät aufgesetztem Reinigungsgerät werden dabei eventuelle Ladungen über das geerdete Gehäuse des Regelgerätes abgeleitet. Wird das Reinigungsgerät bzw. ein entsprechendes Gerät für separate Verwendung unabhängig vom Regelgerät aufgestellt, ist sein Gehäuse zu erden.

## Patentansprüche

1. Lötstation mit mindestens einem Lötkolben (1) und einem Regelgerät (5) für denselben oder dieselben und einem am Regelgerät (5) lösbar aufsetzbaren Lötkolben-Reinigungsgerät (3),
dadurch **gekennzeichnet**,
daß das Regelgerät (5) ein sattelartiges Auflager mit sich nach oben verjüngenden Kupplungsorganen und ein Gehäuse aus abschirmendem Material aufweist.

2. Lötstation nach Anspruch 1,
dadurch **gekennzeichnet**,
daß das Gehäuse einen Niederspannungsanschluß zum Betrieb des Reinigungsgeräts aufweist.

3. Lötstation nach Anspruch 1 oder 2,
dadurch **gekennzeichnet**,
daß ein Netztransformator (41) in einem separaten Gehäuse getrennt von dem Regelgerät (5) untergebracht ist und vom Regelgerät aus ein- und ausschaltbar ist.

4. Lötstation nach Anspruch 1,
dadurch **gekennzeichnet**,
daß ein Standby-Schaltzustand (10) wählbar ist, bei welchem der Lötkolben (1) vorgeheizt wird.

5. Lötstation nach Anspruch 1,
dadurch **gekennzeichnet**,
daß ein Eichkreis (20-24) mit einem Fühler (20) zur Erfassung der Lötspitzen-Temperatur und zur Eichung des Regelkreises vorgesehen ist.

6. Lötstation nach einem der Ansprüche 1 bis 5,
dadurch **gekennzeichnet**,
daß das Gehäuse des Reinigungsgerätes (3) aus leitendem Material besteht und geerdet ist.

## Claims

1. Soldering station having at least one soldering iron (1) and a control unit (5) for same, and a detachable soldering iron cleaning device (3) which can be attached to the control unit (5), characterised in that the control unit (5) has a saddle-type support with upwards tapering coupling elements and a housing made of screening material.

2. Soldering station according to Claim 1, characterised in that the housing has a low-voltage connection for operating the cleaning device.

3. Soldering station according to Claim 1 or 2, characterised in that a mains transformer (41) is accommodated separately from the control unit (5) in a separate housing and can be switched on and off from the control unit.

4. Soldering station according to Claim 1, characterised in that a standby operating state (10) can be selected, in which the soldering iron (1) is pre-heated.

5. Soldering station according to Claim 1, characterised in that a calibration circuit (20-24) with a sensor (20) is provided for sensing the temperature of the soldering iron tip and for calibration.

6. Soldering station according to one of Claims 1 to 5, characterised in that the housing of the cleaning device (3) consists of conductive material and is earthed.

## Revendications

1. Poste de brasage ou de soudure tendre comportant au moins un fer à souder (1) et un appareil régulateur (5) pour celui-ci ou ceux-ci, ainsi qu'un appareil de nettoyage (3) du fer à souder, pouvant être accroché de façon démontable sur l'appareil régulateur (5),
caractérisé en ce que l'appareil régulateur (5) comporte un support en forme de salle muni d'organes d'accouplement se resserrant vers le haut, ainsi qu'un carter réalisé en une matière faisant écran.

2. Poste de brasage ou de soudure tendre selon la revendication 1, caractérisé en ce que le carter comporte une prise de courant basse tension pour l'utilisation de l'appareil de nettoyage.

3. Poste de brasage ou de soudure tendre selon la revendication 1 ou 2, caractérisé on ce qu'un transformateur de secteur (41) est agencé séparément de l'appareil régulateur (5), dans un boîtier séparé, et peut être mis en marche et arrêté à partir de l'appareil régulateur.

4. Poste de brasage ou de soudure tendre selon la revendication 1, caractérisé en ce que l'on peut sélectionner un mode de fonctionnement en veille (10), dans lequel le fer à souder (1) est préchauffé.

5. Poste de brasage ou de soudure tendre selon la revendication 1, caractérisé en ce qu'un circuit d'étalonnage (20 à 24) est prévu, qui comporte un capteur (20) destiné à mesurer la température de la pointe du fer à souder, et à étalonner le circuit de régulation.

6. Poste de brasage ou de soudure tendre selon l'une des revendications 1 à 5, caractérisé en ce que le carter de l'appareil de nettoyage (3) est réalisé en une matière conductrice et est relié à la terre.
